# EUROPÄISCHE PATENTSCHRIFT

(11) **EP 0 423 626 B1**
(45) Veröffentlichungstag und Bekanntmachung des Hinweises auf die Patenterteilung: **25.08.1993**
(21) Anmeldenummer: 90119544.6
(22) Anmeldetag: 11.10.1990
(51) Int. Cl.: A01D 45/02

(54) **Pflückvorrichtung zum Ernten von Halmfrüchten, insbesondere Mais**
Harvesting device for cereals, especially maize
Dispositif à ramasser pour récolter des céréales, en particulier de mais

(30) Priorität: 19.10.1989 DE 3934862
(43) Veröffentlichungstag der Anmeldung: 24.04.1991
(73) Patentinhaber: BISO GmbH Maschinenfabrik, D-32289 Rödinghausen (DE)
(72) Erfinder: Scharf, Alois, W-4520 Melle 8 - St. Annen (DE)
(74) Vertreter: Zinnecker, Armin, Dipl.-Ing.

(56) Entgegenhaltungen:
- EP-A- 0 365 019
- DE-A- 3 515 295
- DE-A- 3 727 535

## Beschreibung

Die Erfindung betrifft eine Pflückvorrichtung zum Ernten von Halmfrüchten, insbesondere Mais, nach dem Oberbegriff des Anspruchs 1.

Eine derartige Vorrichtung ist aus der DE-OS 37 27 535 bekannt.

Aufgabe der Erfindung ist es, eine Pflückvorrichtung dieser Art zu schaffen, bei der die Häckselwirkung verbessert ist.

Erfindungsgemäß wird diese Aufgabe dadurch gelöst, daß die Messer an ihrer radial außen liegenden Seite keilförmig gestaltet und/oder gezahnt sind. Praktische Versuche haben ergeben, daß hierdurch eine erhebliche Verbesserung der Häckselwirkung erreicht werden kann.

Die Leitbleche können verstellbar angeordnet sein. Dadurch kann die Vorrichtung an verschiedene äußere Bedingungen einfach angepaßt werden, insbesondere an das zu häckselnde Gut.

Auch die Rückhaltebleche können verstellbar angeordnet sein, damit die Vorrichtung einfach angepaßt werden kann.

Wenn die Rückhaltebleche einzeln verstellbar sind, ergibt sich eine besonders vielseitige Anpassungsmöglichkeit.

Als besonders vorteilhaft haben sich gezahnte Rückhaltebleche erwiesen. Die Zahnung ist auch relativ einfach herstellbar.

Die Rückhaltebleche können auch aus Vierkantleisten bestehen.

Als besonders vorteilhaft hat sich herausgestellt, daß die Rückhaltebleche in der Rotationsebene der Messer geteilt sind, um einen Zwischenraum für die Messer freizulassen. Die Messer können dadurch in den so entstandenen Schlitz eingreifen und dadurch intensiver die Stengel, insbesondere die Maisstengel, zerschneiden.

Die Verzahnung der Rückhaltebleche kann zu den Messern hin in Messer-Drehrichtung kontinuierlich größer werden. Sie kann auch kontinuierlich kleiner werden.

Die Rückhaltebleche können mit dem Leitblech verschraubt sein. Dadurch ist ein einfaches und schnelles Auswechseln der Rückhaltebleche möglich. Es kann auch beispielsweise ein verzahntes Rückhalteblech gegen ein aus Vierkantleisten bestehendes einfach und schnell ausgetauscht werden.

Vorzugsweise können die Rückhaltebleche durch Stellschrauben oder Exzenter von dem feststehenden Leitblech zu den rotierenden-Messern hin oder umgekehrt verstellt werden. Dadurch kann der Abstand zwischen den Messern und den Rückhalteblechen den jeweiligen Erfordernissen auf einfache und schnelle Weise angepaßt werden.

Vorzugsweise sind einzeln an dem Leitblech drehbar gelagerte Sperrklappen vorhanden, die durch Hebel und diese verbindende Stellglieder oder -ketten verstellt werden können.

Gemäß einer vorteilhaften Weiterbildung der Erfindung ist das rotierende Messer gezahnt ausgebildet. Die Verzahnung des rotierenden Messers bringt in Zusammenarbeit mit den Rückhalteblechen ein wesentlich kürzeres Häckselgut. Die gezahnten Messer wirken nämlich auf den Stengel verletzend, das heißt der Stengel wird in sich zerrissen und gespalten, was bei einem Messer mit glatter Schneide nicht in demselben Maß der Fall ist. Weiterhin bleiben die Messerschneiden von gezahnten Messern länger scharf, da diese Schneiden in einem stumpferen Winkel zum Schneidgut stehen. Weiterhin bringt das Überspringen von Zahn zu Zahn einen Hackeffekt mit sich, der die Schneidwirkung zusätzlich unterstützt. Für Mais, dessen Stengel sehr dick sein können, kann vorzugsweise eine grobere Zahnung gewählt werden, um den zuletzt genannten Hackeffekt noch zu vergrößern.

Es können auch mehrere Messer parallel zueinander angeordnet sein, um die Schneidleistung zu vergrößern.

In vorteilhafter Weiterbildung der Erfindung können die Rückhaltebleche in Drehrichtung hinterschliffen sein. Dies ist besonders dann vorteilhaft, wenn die Rückhaltebleche aus Winkel-oder Flachstäben bestehen.

Die Häckselwirkung kann weiterhin dadurch verbessert werden, daß auf der dem Leitblech gegenüberliegenden Seite der rotierenden Messer ein Zuleitblech angeordnet ist. Durch das Zuleitblech werden die Stengel den rotierenden Messern zugeführt, so daß diese die Stengel erfassen und wirkungsvoll zerkleinern können.

Vorzugsweise sind quer zur Mähdrescher-Fahrtrichtung mehrere Stengelhäcksler vorgesehen. Die Anzahl der Stengelhäcksler entspricht dabei der Anzahl der Reihen von Halmfrüchten. Es ist möglich, bis zu acht oder auch noch mehr Stengelhäcksler vorzusehen. Es ist auch möglich, mehr als eine Pflückvorrichtung anzuordnen, was insbesondere in einem unebenen oder hügeligen Gelände von Vorteil ist.

Das Zuleitblech kann schräg auf die rotierenden Messer zu verlaufen. Vorzugsweise endet das Zuleitblech im Bereich der Verbindungslinie der Messer-Drehachsen. Vorteilhaft ist es, wenn der Abstand des Zuleitblechs von der zugehörigen Messer-Drehachse nur geringfügig größer ist als der Umlaufkreis der Messer, so daß die oben beschriebene Lücke bestmöglich geschlossen wird.

Das Zuleitblech kann als Leitkeil ausgebildet sein. Wenn das jeweilige Zuleitblech an der jeweiligen Rückseite des benachbarten Leitblechs angeordnet ist, wird der gesamte Aufbau vereinfacht und damit die Herstellung verbilligt.

Vorzugsweise sind die Stengelhäcksler durch eine oder mehrere Kufen auf dem Boden abgestützt, wodurch eine optimale Anpassung an verschiedene Bodenverhältnisse gewährleistet ist. Die Stengelhäcksler können im Bereich ihres hinteren Endes elastisch aufgehängt sein, um die Bodenführung zu verbessern.

Vorzugsweise sind die Stengelhäcksler im Bereich ihres hinteren Endes durch eine Kette mit einem Anhängepunkt verbunden, wobei die Länge der Kette die Bewegung der Stengelhäcksler nach unten begrenzt. Die Kette sorgt also für eine Endbegrenzung derjenigen Bewegung der Stengelhäcksler, die eine optimale Anpassung an verschiedene Bodenverhältnisse gewährleistet.

Ausführungsbeispiele der Erfindung werden nachstehend anhand der beigefügten Zeichnungen im einzelnen erläutert. In den Zeichnungen zeigt
- Fig. 1: einen Mähdrescher mit einem Ausführungsbeispiel einer erfindungsgemäßen Pflückvorrichtung in einer Seitenansicht,
- Fig. 2: in einer Ansicht von unten eine Ausführungsform der Messer sowie eines Leitblechs mit aufgeschraubtem, gezahnten Rückhaltebelag (Rückhalteblech),
- Fig. 3: in einer Seitenansicht und in einer Draufsicht ein verstellbares Leitblech mit einem eingeschraubten Rückhalteblech, das etwa senkrecht auf dem Leitblech steht, und mit auf dem Leitblech verschweißten oder verschraubten Profilen, die etwa in der Mitte eine freie Bahn für den Eingriff der umlaufenden Messer freilassen,
- Fig. 4: ein Leitblech mit zentral und einzeln verstellbaren Rückhalteblechen,
- Fig. 5: ein verstellbares Leitblech mit aufgeschweißten Rückhaltern, die am Auswurf, hier in Drehrich tung der Schlegelmesser, größer werden,
- Fig. 6: in einer Seitenansicht und in einer Draufsicht ein Leitblech mit einzeln verstellbaren Messern, die so angeordnet sind, daß umlaufende Messer zwischen zwei Reihen eingreifen können,
- Fig. 7: ein Leitblech mit profilierten Winkel- oder Flacheisenstäben,
- Fig. 8: eine der Figur 2 entsprechende Darstellung mit einem gezahnten Messer,
- Fig. 9: eine Darstellung der Figur 8 von der Seite,
- Fig. 10: eine weitere den Figuren 2 und 8 entsprechende Ausführungsform mit spiegelbildlichem Anschliff,
- Fig. 11: eine Darstellung der Figur 10 von der Seite,
- Fig. 12: ein gezahntes Messer in einer vergrößerten Darstellung,
- Fig. 13: ein weiteres gezahntes Messer nach Fig. 12,
- Fig. 14: die Ausführungsform eines gezahnten Messers mit spiegelbildlich zu Fig. 13 angeschliffener Verzahnung und Schneide,
- Fig. 15: eine der Fig. 7 entsprechende Darstellung eines Leitblechs mit profilierten Winkel- oder Flacheisenstäben, die in Drehrichtung hinterschliffen sind,
- Fig. 16: eine weitere Pflückvorrichtung in einer Seitenansicht,
- Fig. 17: eine Darstellung der Stengelhäcksler von unten,
- Fig. 18: einen vergrößerten Ausschnitt aus der Fig. 17,
- Fig. 19: einen vergrößerten Ausschnitt aus der Fig. 16,
- Fig. 20: eine Teilansicht der Vorrichtung von oben,
- Fig. 21: ein stirnseitig geschliffenes und gezahntes Messer in einer Ansicht von oben,
- Fig. 22: das in Fig. 21 gezeigte Messer in einem Querschnitt,
- Fig. 23: das in Fig. 21 dargestellte Messer in einem Längsschnitt,
- Fig. 24: ein weiteres stirnseitig geschliffenes und gezahntes Messer, bei dem der stirnseitige Anschliff symmetrisch ist,

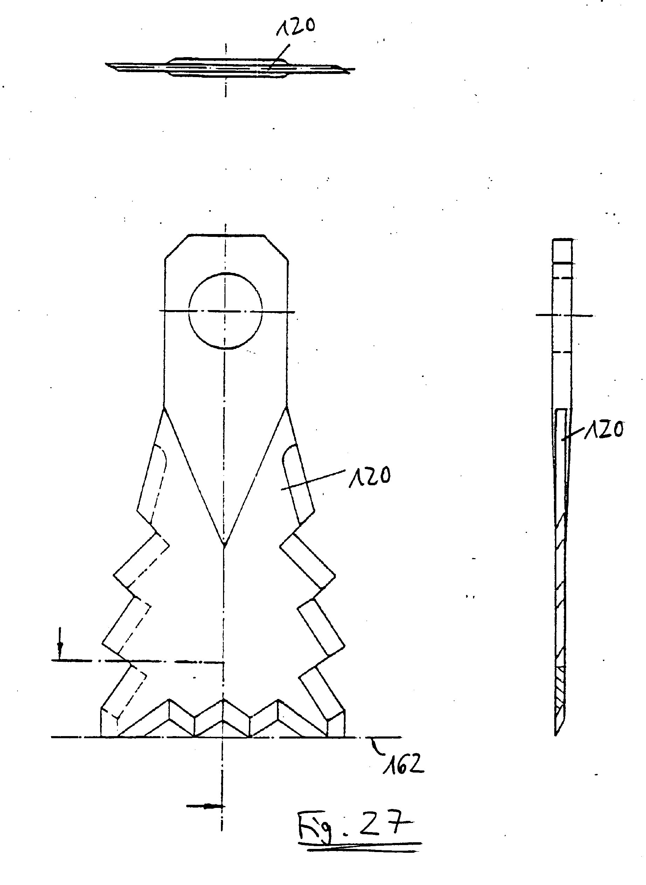

- Fig. 25: einen Querschnitt durch das Messer gemäß Fig. 24,
- Fig. 26: einen Längsschnitt durch das in Fig. 24 dargestellte Messer,
- Fig. 27: ein weiteres Messer, das an der Stirnseite gerade geschliffen und gezahnt ist, in einer Ansicht von oben, in einem Querschnitt und in einem Längsschnitt,
- Fig. 28: ein weiteres Messer, das an der Stirnseite gerade geschliffen und gezahnt ist und bei dem der Anschliff an den Längsseiten um 180° gedreht ist, in einer Ansicht von oben, in einem Längsschnitt und in einem Querschnitt und
- Fig. 29: ein weiteres Messer, das an der Stirnseite rund geschliffen und gezahnt ist und bei dem der Anschliff an den Längsseiten um 180° gedreht ist, in einer Ansicht von oben, in einem Querschnitt und in einem Längsschnitt.

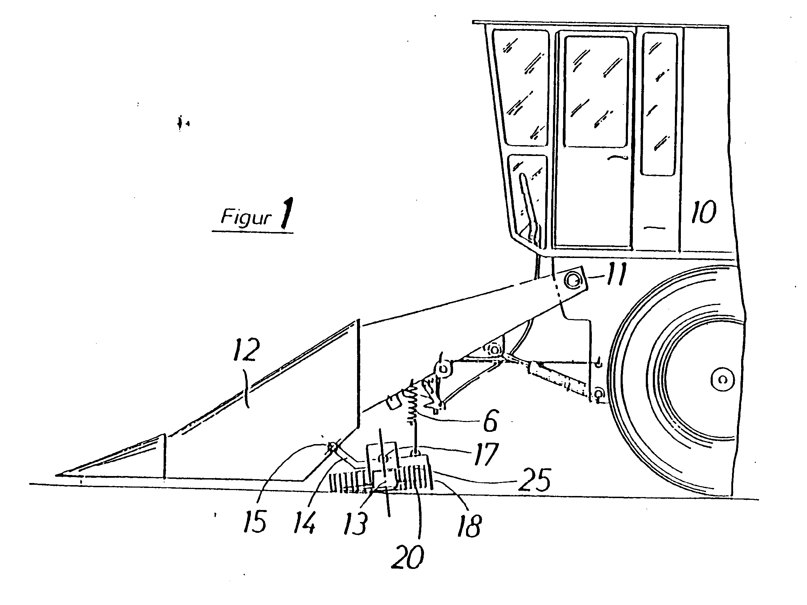

Gemäß Fig. 1 ist an der Vorderseite eines Mähdreschers 10 auf einer Achse 11 eine Pflückvorrichtung 12 zum Ernten von Halmfrüchten, insbesondere Mais, gelagert. Der Häcksler 13 ist mit dem Schwenkarm 14 auf dem Lagerbolzen 15 an der Pflückvorrichtung 12 gelagert und an Zugfedern 6 an der Pflückvorrichtung 12 aufgehängt. Die Pflückvorrichtung 12 wird von dem Mähdrescher 10 angetrieben und treibt wiederum den Häcksler 13 an.

Ein Kegelradgetriebe oder ein Hydro-Motor 17 bringt die von dem Gehäuse (18) umgebenen Messer 20 in Rotation. Die in der Zeichnung nicht dargestellten Pflückerwalzen trennen die Halmfrüchte (Maiskolben) vom Stengel ab und leiten diese zum Beispiel in einem Elevator zur Mähdreschertrommel.

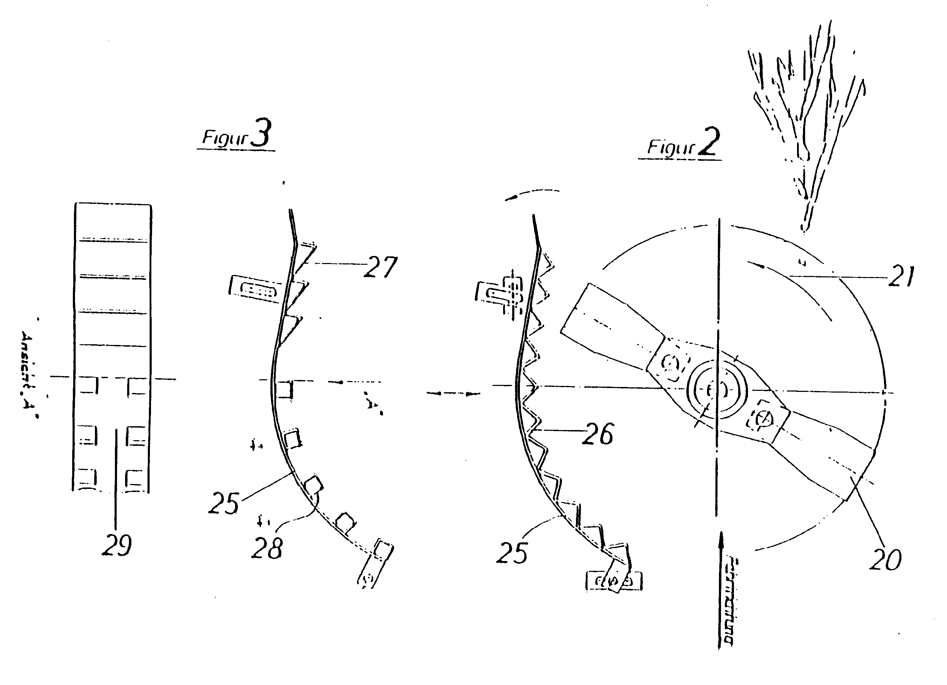

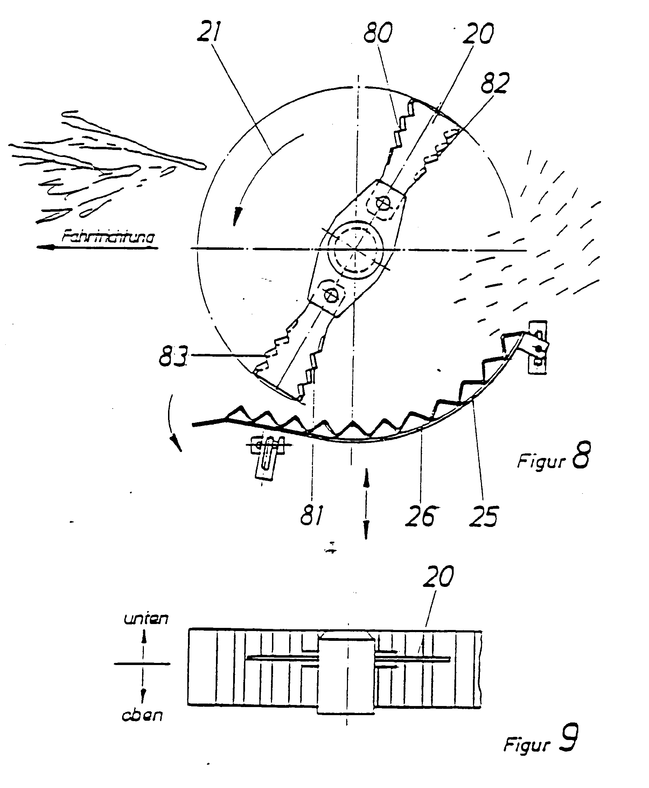

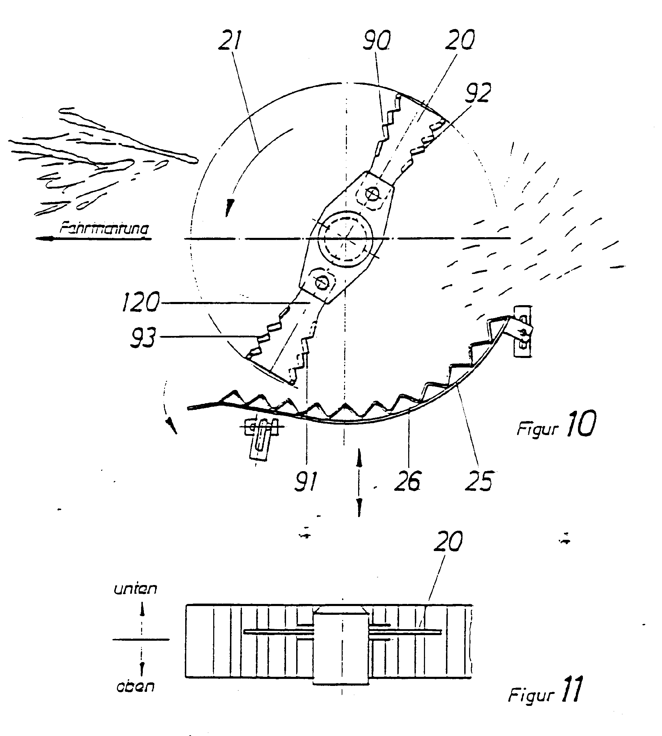

Die von den Früchten (Maiskolben) freien Stengel werden von den Häckslermessern 20 dicht über dem Boden abgeschnitten und zerkleinert auf den Acker geworfen, wie dies aus Figuren 8 und 10 ersichtlich ist. Ein Leitblech 25 mit Rückhaltern sorgt dafür, daß die Maisstengel über die ganze Länge zerkleinert werden und verteilt auf den Acker breitgestreut werden. In Fig. 2 ist die Fahrtrichtung mit einem Pfeil angegeben; der Pfeil 21 zeigt die Drehrichtung der Messer 20. Das Leitblech 25 mit den Rückhalteblechen 26 ist über zwei Langlochführungen verstellbar und verschwenkbar. Die in Drehrichtung der Messer 20 zuerst angeordnete Langlochführung besteht aus zwei Langlöchern, die etwa rechtwinkelig zueinander angeordnet sind. Die in Drehrichtung hintere Langlochführung besteht aus einem einzigen Langloch.

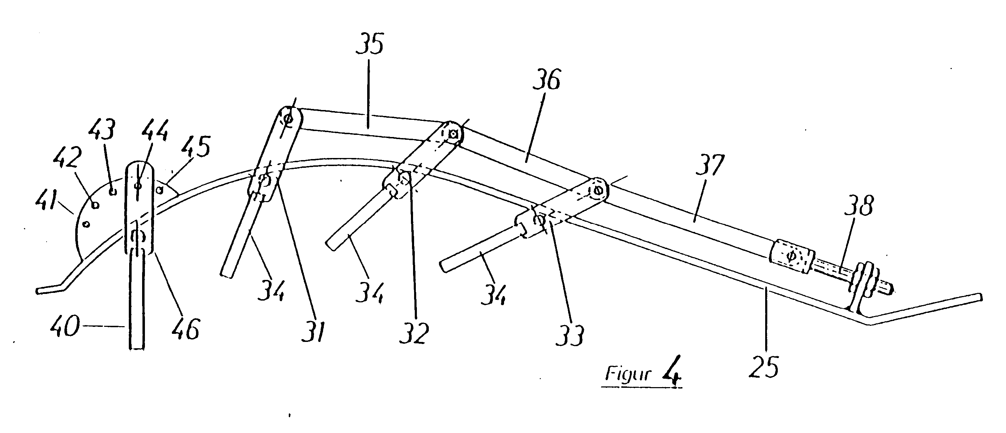

Fig. 3 zeigt ein mit verschiedenen Rückhaltern bestücktes Leitblech 25. Das Rückhalteblech 27 greift durch die sehr steile Anstellung stark in den Durchfluß der Stengel ein und bringt sehr kurze gehäckselte Maisstengel auf den Acker. Die Profilstäbe 28, die aus Vierkantprofilen bestehen, lassen über die Mitte des Leitbleches in Flußrichtung den Durchgang 29 für die umlaufenden Schlegelmesser frei mit dem Ergebnis eines besonders intensiven Häckselns.

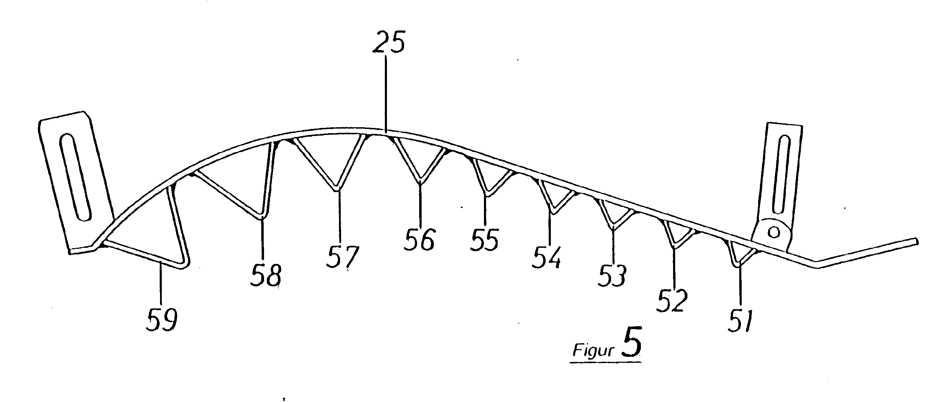

Fig. 4 zeigt ein Leitblech 25 mit in den Punkten 31, 32 und 33 schwenkbar angeordneten Rückhalteblechen 34, die über die Gelenkstangen 35, 36 und 37 und die Stellschraube 38 verstellt werden können. Der Rückhalter 40 kann in den verschiedenen Bohrungen 41 bis 45 arretiert werden. Er ist um den Punkt 46 drehbar gelagert.

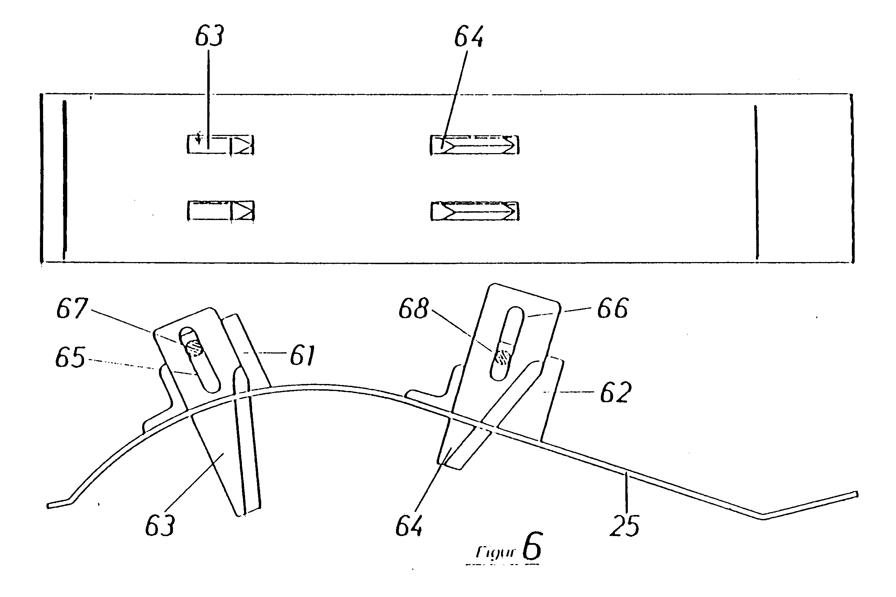

Fig. 5 zeigt ein verstellbares Leitblech 25 mit kontinuierlich größer werdenden Rückhalteblechen 51 bis 59, die mit dem Leitblech verschweißt sind.

Fig. 6 zeigt ein Leitblech 25 mit Messerhaltern 61 und 62 und mit Messern 63 und 64, die über die Langlöcher 65 und 66 unterschiedlich tief zum Eingriff gebracht werden können und mit Schrauben 67 und 68 befestigt werden.

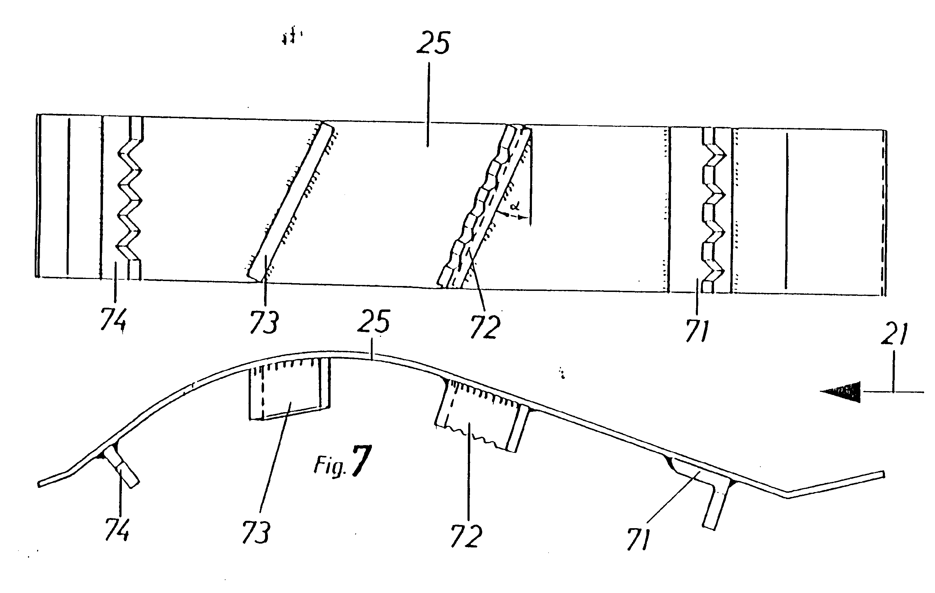

Fig. 7 zeigt ein Leitblech 25 mit aufgeschweißten gezahnten oder profilierten Winkelstäben 71 und Flacheisenstäben 72, 73 und 74, die im rechten Winkel oder nach hinten geneigt auf dem Leitblech stehen. Die Stäbe 71 bis 74 sind in Drehrichtung 21 der umlaufenden Messer 20 rechtwinkelig oder nach unten unter einem Winkel voreilend im Leitblech angeordnet, damit die Maisstengel sich durch das Gegenschlagen der rotierenden Messer aufrichten und beim Schneiden nach unten gezogen werden.

Fig. 8 zeigt eine im wesentlichen der Fig. 2 entsprechende Darstellung. Einander entsprechende Teile sind dabei mit denselben Bezugsziffern bezeichnet. Das Messer 20 rotiert in Richtung des Pfeiles 21. Die beiden vorlaufenden Messerkanten 80 und 81 sind gezahnt. Die Zahnung ist dabei so ausgeführt, daß das Häckselgut durch beide gezahnten Schneiden, also sowohl durch die gezahnte Schneide 80 als auch durch die gezahnte Schneide 81 jeweils nach oben ausgelenkt wird (siehe Fig. 9). Wie aus Fig. 8 ersichtlich, sind auch die beiden nachlaufenden Kanten 82 und 83 des Messers 20 gezahnt ausgebildet. Wenn die Kanten 80 und 81 unscharf werden, kann das Messer 20 um seine Längsachse um 180° gedreht und anschließend erneut montiert werden, wodurch die Kanten 82 und 83 in Eingriff gelangen. Wie aus der Fig. 8 ersichtlich, bewirken dann auch die Kanten 82 und 83 eine Ablenkung des Häckselgutes nach oben.

Fig. 9 zeigt eine Darstellung der Fig. 8 von der Seite.

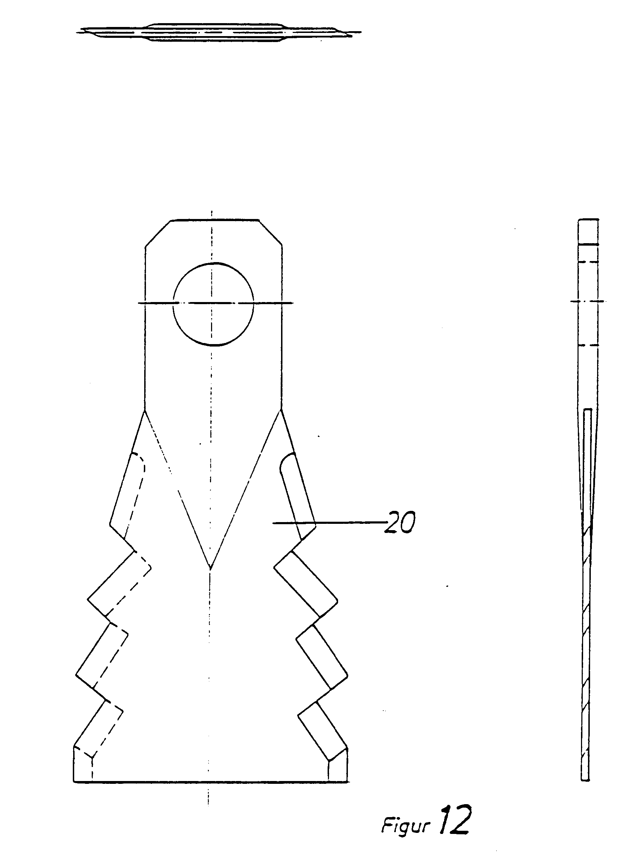

Fig. 10 zeigt eine weitere Ausführungsform eines gezahnten Messers 20. Die vorlaufenden Kanten 90 und 91 des Messers 20 sind dabei so ausgebildet, daß die vorlaufende Kante 90 das Häckselgut nach oben ablenkt, während die vorlaufende Kante 91 das Häckselgut nach unten ablenkt (vgl. auch Fig. 11). Die in der Stellung der Fig. 10 nachlaufenden Kanten 92 und 93 sind so ausgebildet, daß sie nach einer Drehung des Messers 20 um seine Längsachse um 180° an die Stelle der Kanten 90 und 91 treten. Die Kante 92 lenkt dann also das Häckselgut nach oben ab, während die Kante 93 das Häckselgut nach unten ablenkt. Das Messer 20 kann also gewendet werden, ohne daß sich hinsichtlich der Ablenkung des Häckselgutes etwas ändert.

Die Fig. 11 zeigt eine Darstellung der Fig. 10 von der Seite.

Die Fig. 12 zeigt die Darstellung eines gezahnten Messers nach Fig. 8.

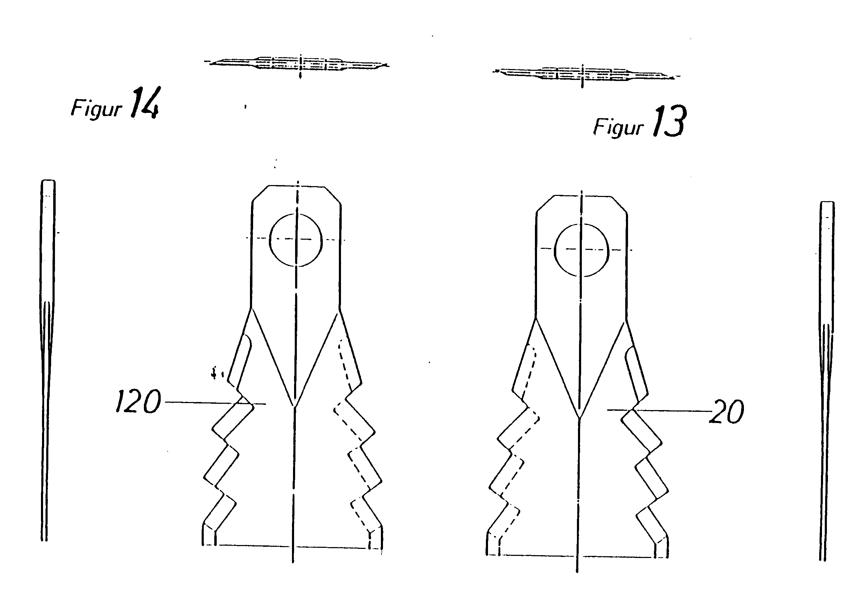

In den Fig. 13 und 14 sind jeweils gezahnte Messer in drei Ansichten gezeichnet. Sie zeigen eine Gegenüberstellung der spiegelbildlich angeschliffenen gezahnten Messer. Fig. 13 entspricht einem Messer nach Pos. 20 und Fig. 14 einem Messer nach Pos. 120.

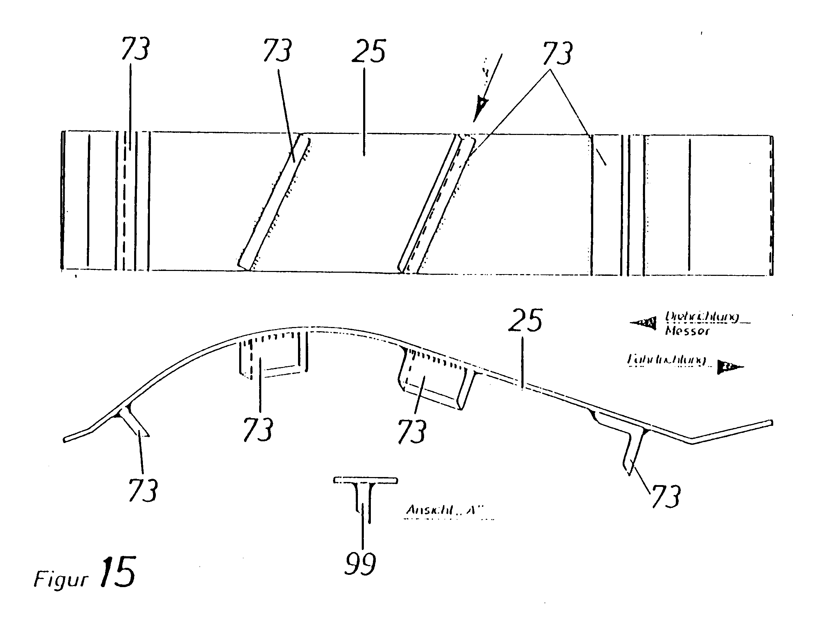

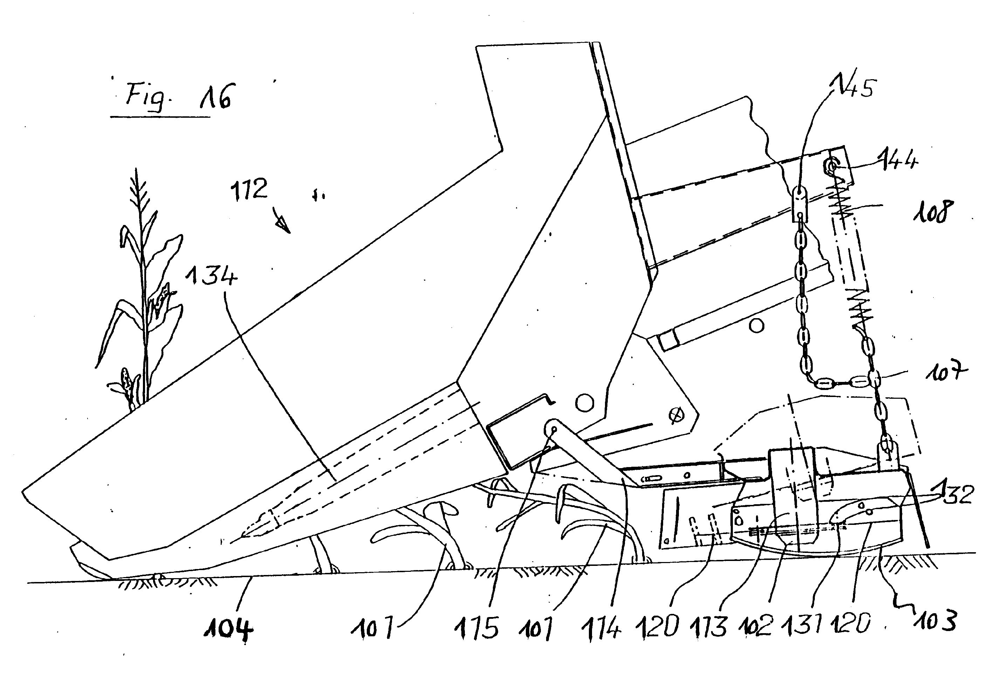

Die Fig. 15 zeigt eine der Fig. 7 entsprechende Darstellung eines Leitbleches 25 mit aufgeschweißten Flacheisenstäben 73. Wie in der Ansicht "A" besonders deutlich zu sehen, sind die Flachstäbe 73 in Drehrichtung hinterschliffen; vgl. Bezugsziffer 99. Die Fig. 16 zeigt die Pflückvorrichtung 112 zum Ernten vom Halmfrüchten, insbesondere Mais, die an einem in der Fig. 16 nicht gezeigten Mähdrescher gelagert sein kann. Der Stengelhäcksler 113 ist mit dem Schwenkarm 114 auf dem Lagerbolzen 115 an der Pflückvorrichtung 112 gelagert. Der Häcksler 113 dient zum Zerkleinern und Breitstreuen der Stengel 101. Er besitzt um eine vertikale Achse 102 rotierende Messer 120. Der Stengelhäcksler 113 ist durch mehrere Kufen 103 auf dem Boden 104 abgestützt. Weiterhin ist er im Bereich seines hinteren Endes elastisch aufgehängt, und zwar durch eine Kette 107 und eine Zugfeder 108.

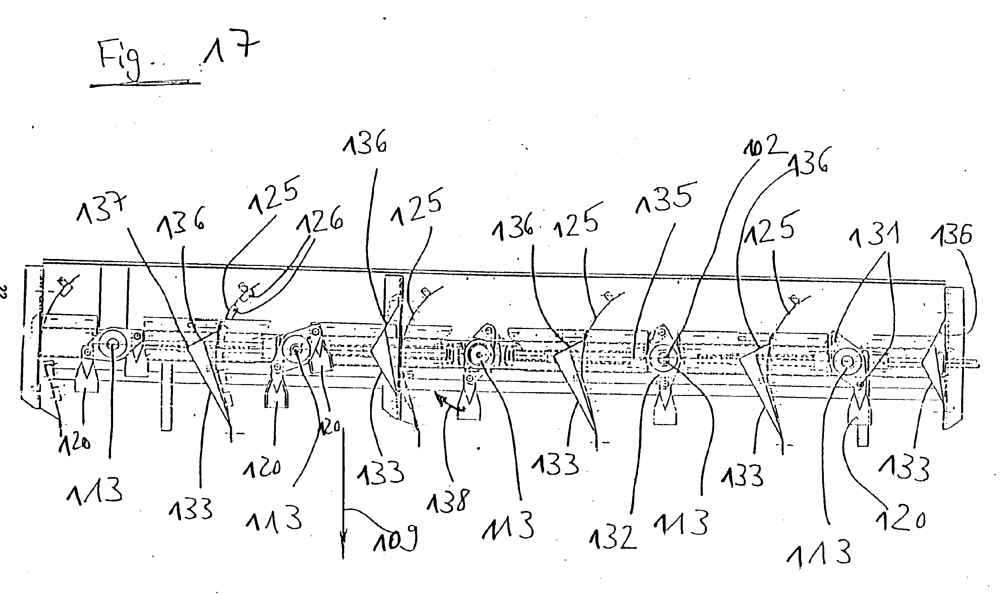

Die Fig. 17 zeigt eine Draufsicht von unten auf die quer zur Mähdrescher-Fahrtrichtung 109 nebeneinander im Abstand voneinander angeordneten Stengelhäcksler 113. In der Fig. 18 ist ein vergrößerter Ausschnitt aus der Fig. 17 dargestellt, in dem zwei nebeneinander quer zur Mähdrescher-Fahrrichtung 109 im Abstand voneinander angeordnete Stengelhäcksler 113 zu sehen sind. Zu jedem Stengelhäcksler 113 gehört ein diesen teilweise umgebendes Leitblech 125, in dem Rückhaltebleche 126 angeordnet sind. Die Rückhaltebleche 126 dienen dazu, ein kürzeres Schneiden der Stengel zu bewirken, wie in der DE-OS 37 27 535 ausführlich erläutert.

Jeder Stengelhäcksler 113 besitzt zwei um 180° versetzte Messer 120, die in der Fig. 18 im Stillstand gezeigt sind. Wenn die Messer um die Stengelhäcksler-Drehachse 102 rotieren, weisen sie durch die Zentrifugalkraft ebenfalls nach außen. Jedes Messer 120 ist zu diesem Zweck um einen Bolzen 131 drehbar gelagert, der in zwei parallelen Befestigungsblechen 132 angeordnet ist.

Auf der dem jeweiligen Leitblech 125 gegenüberliegenden Seite der rotierenden Messer 120 ist jeweils ein Zuleitblech 133 angeordnet. Dieses Zuleitblech 133 wirkt als Leitkeil. Es deckt den freien Raum zwischen der Rückseite des Leitblechs 125 und den rotierenden Messerspitzen des angrenzenden Stengelhäckslers 113 ab, so daß die in diesem Bereich ankommenden Stengel den Messern 120 zugeleitet werden. Die Maisreihen haben einen Abstand von 700 bis 800 mm. In diesem Abstand sind auch die horizontal rotierenden Messer 120 bzw. die Messerdrehachsen 102 angeordnet. Der Außendurchmesser der rotierenden Messer 120 beträgt demgegenüber maximal 580 mm. Es entsteht daher möglicherweise die Schwierigkeit, daß ein Streifen Maisstengel und -blätter, die durch die Pflückerwalzen 134 (Fig. 16) nach unten gedrückt waren, in voller Länge bis auf den Boden 104 heruntergedrückt werden. Der durch das Zuleitblech 133 gebildete Leitkeil führt in dieser Lücke von etwa 150 bis 200 mm die Maisstengel den rotierenden Messern 120 zu, so daß diese Messer 120 die Maisstengel mit herumnehmen können und sie anschließend im Zusammenwirken mit den Rückhalteblechen 126 zerkleinern. Um die Lücke, die durch das Zuleitblech 133 geschlossen wird, anderweitig zu schließen, wäre es an sich denkbar, die Länge der Messer 120 zu vergrössern. Dies würde jedoch die gesamte Vorrichtung wesentlich verteuern, da längere Messer teurer sind. Auch der Wartungaufwand, der im wesentlichen durch das Erfordernis bestimmt wird, die Messer zu schleifen, würde wesentlich vergrößert. Schließlich müßten beim Anlaufen wesentlich größere Massenträgheitsmomente überwunden werden. Durch die Erfindung wird es ermöglicht, eine große Arbeitsbreite bei relativ kurzen Messern 120 zu erreichen und gleichzeitig eine sehr gute Häckselwirkung zu gewährleisten.

Das Zuleitblech 133 verläuft schräg auf die rotierenden Messer 120 zu; es endet im Bereich der Verbindungslinie 135 der Messer-Drehachsen 102. An das Zuleitblech 133 schließt sich die Rückseite 136 an, die mit dem Zuleitblech 133 einen Winkel von etwa 90° bildet. Die Ecke 137 zwischen dem Zuleitblech 133 und der Rückseite 136 liegt in etwa auf der Verbindungslinie 135 der Messer-Drehachsen 102. Der Abstand des Zuleitblechs 133 von der zugehörigen Messer-Drehachse 102 (in Fig. 18 links von dem Zuleitblech 133) ist nur geringfügig größer als der Umlaufkreis der Messer 120. Mit anderen Worten: Die Messer 120 gelangen bei ihrer Rotation relativ nahe bzw. möglichst nahe an die Ecke 137, ohne diese jedoch zu berühren, so daß das Zuleitblech 133 den Spalt zwischen dem äußeren Umlaufkreis der Messer und der Rückseite des Leitblechs 125 möglichst vollständig abdeckt. Die Messer 120 rotieren dabei in Richtung der Pfeile 138.

Das jeweilige Zuleitblech 133 ist auf der Rückseite des benachbarten Leitblechs 125 angeordnet. Die Verbindung kann auf bekannte Art und Weise erfolgen, beispielsweise durch Verschraubung oder Verschweißung oder ähnliches.

Die in Fig. 16 gezeigte Aufhängung durch Federn 108 soll den Stengelhäcksler 113 entlasten, damit er nicht mit vollem Gewicht mit den Kufen 103 über den Boden 104 schleift. Weiterhin wirken die Federn 108 bei Bodenunebenheiten entlastend.

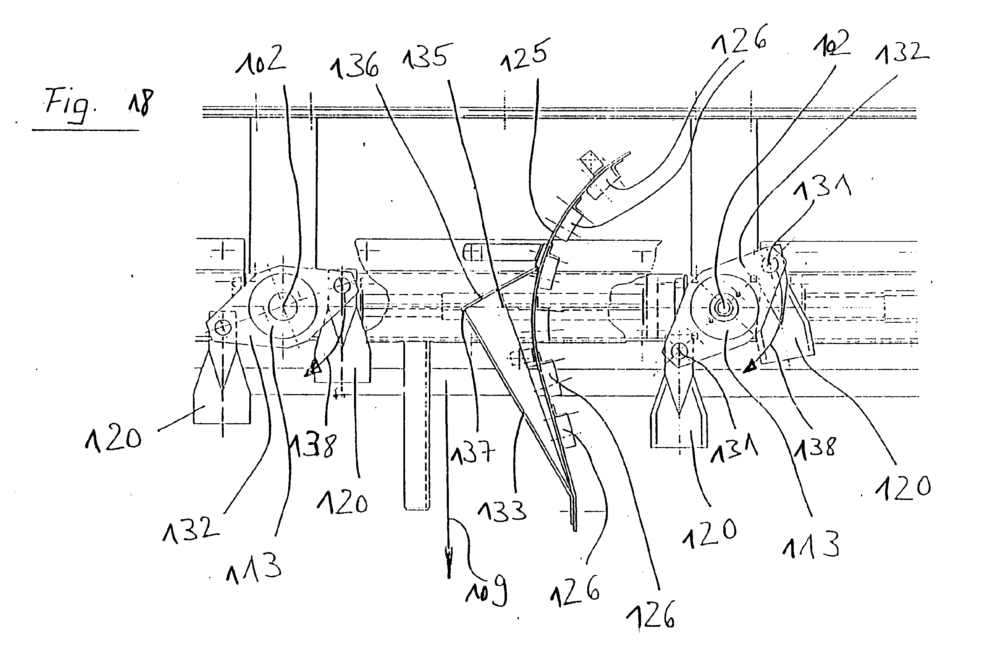

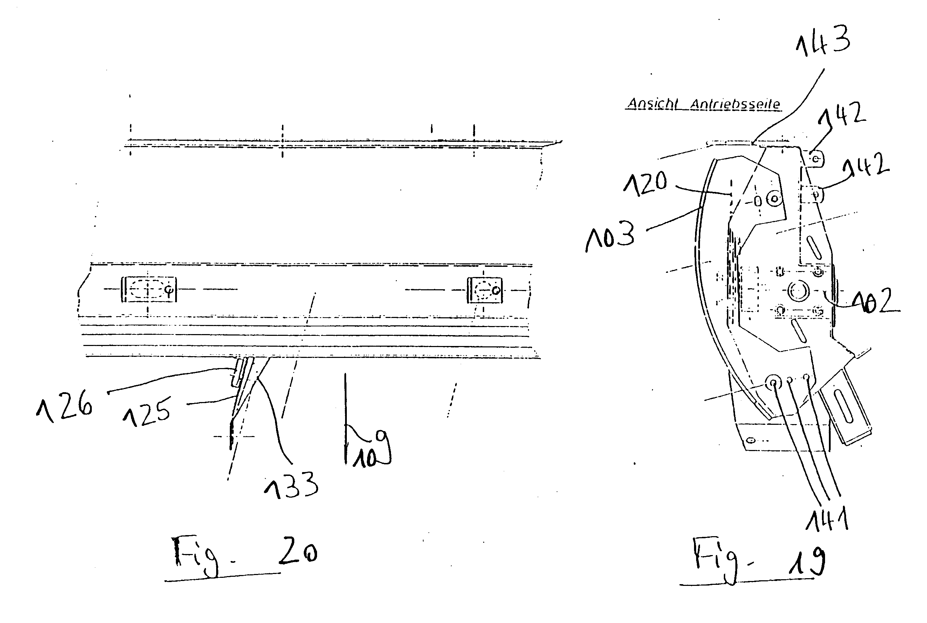

Die Fig. 19 zeigt den in Fig. 16 dargestellten Stengelhäcksler in einer vergrößerten Darstellung. Die Kufe 103 kann mittels der Lochreihe 141 verstellt werden. Der Stengelhäcksler wird durch die mit Löchern versehenen Laschen 142 am Pflücker angehängt. Der Gummischutz 143 deckt die Spitzen der Messer 120 ab, um eine Verletzungsgefahr auszuschließen und fliegende Teile (Steine, Stengelknoten oder Stahlteile) abzufangen. In der Fig. 20 werden das Leitblech 125 und das Zuleitblech 133 zum größten Teil von dem Gehäuse abgedeckt. Lediglich die in Fahrtrichtung 109 vorne liegenden Enden sind zu sehen.

Wie in Fig. 16 zu sehen, sind die Stengelhäcksler 113 im Bereich ihres hinteren Endes durch eine Kette 107 mit einem Anhängepunkt 145 verbunden, wobei die Länge der Kette 107 die Bewegung der Stengelhäcksler 113 nach unten begrenzt. Die Kette 107 ist einerseits mit der Feder 108 verbunden. Hierdurch kann das hintere Ende der Stengelhäcksler federnd nachgeben, wodurch eine Anpassung an verschiedene Bodenverhältnisse gewährleistet ist. An einem Glied der Kette 107 ist eine weitere Kette angebracht, die zum Anhängepunkt 145 führt. Diese zum Anhängepunkt 145 führende Kette hängt in der in Fig. 16 gezeigten Stellung durch. Ihre Länge begrenzt den Weg des hinteren Endes des Stengelhäckslers 113 nach unten. Die zum Anhängepunkt 145 geführte Kette 107 sorgt also für eine Endbegrenzung dieser Bewegung der Stengelhäcksler 113 zum Ausgleich der Bodenunebenheiten.

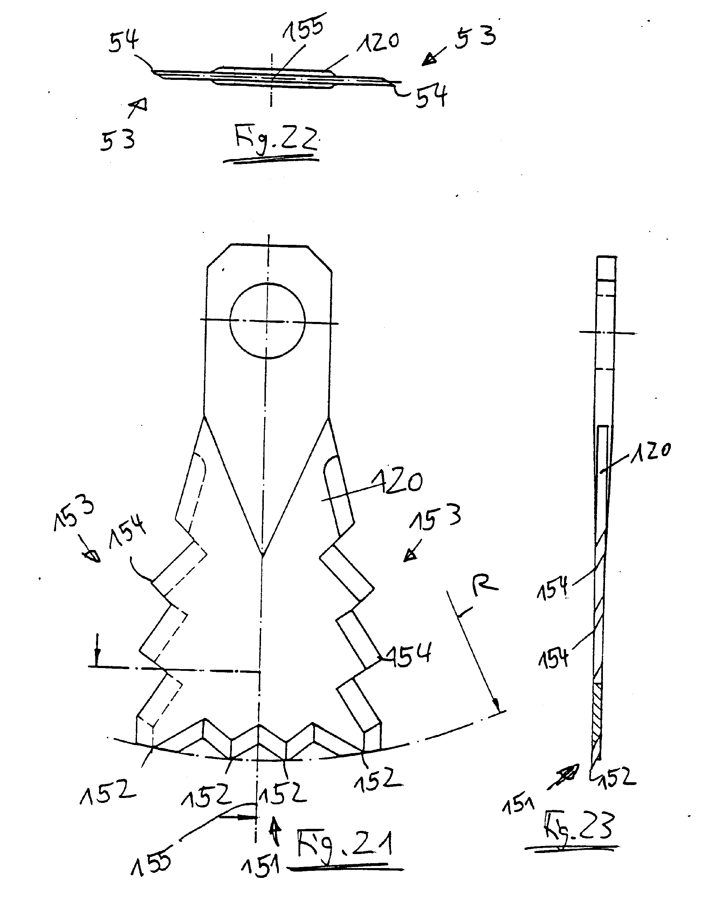

Die Fig. 21 zeigt ein Messer in einer Ansicht von oben, bei dem die Stirnseite 151 schneidenförmig gestaltet ist. Das in Fig. 21 gezeigte Messer 120 weist an der Stirnseite 151 eine runde Schneide auf. Der Messerradius R ist gleich dem Trommel-Radius, also im Abstand der Stirnseite des Messers von der Rotationsachse 102. Das Messer gemäß Fig. 21 ist an der Stirnseite zusätzlich mit Zähnen 152 versehen, also gezahnt. Die Zähne 152 sind symmetrisch zur Längsmittellinie 155 angeordnet. Zusätzlich sind auch an den Längsseiten 153 des Messers 120 Zähne 154 vorhanden. Der Anschliff des Messers 120 an seinen Längsseiten 153 ist um 180° gedreht, wie aus der Fig. 22 ersichtlich. Bei einer Drehung des Messers 120 um 180° um seine Längsmittelachse 155 wird das Messer also in sich über führt.

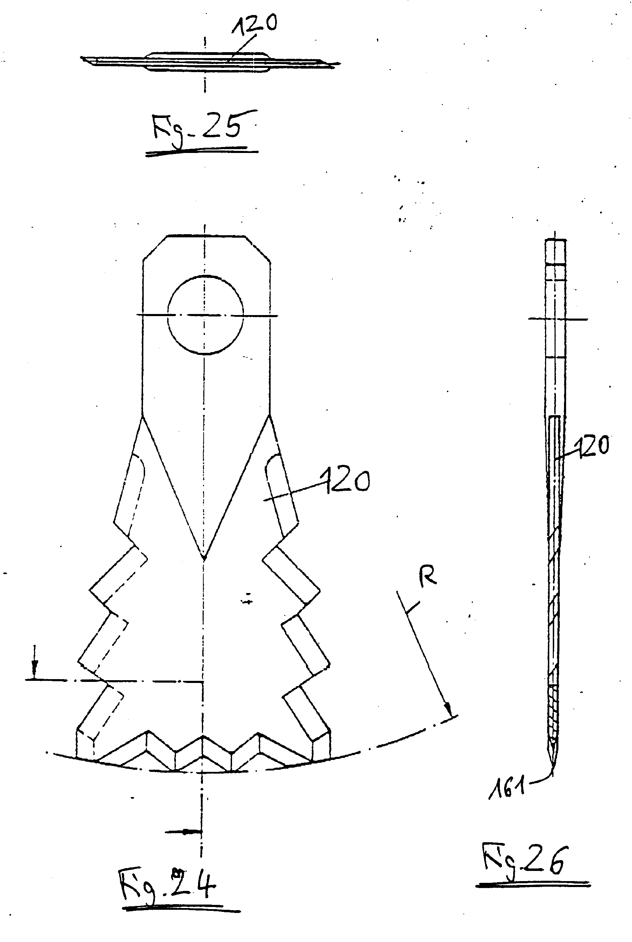

Die Fig. 23 zeigt einen Längsschnitt durch das in Fig. 21 dargestellte Messer.

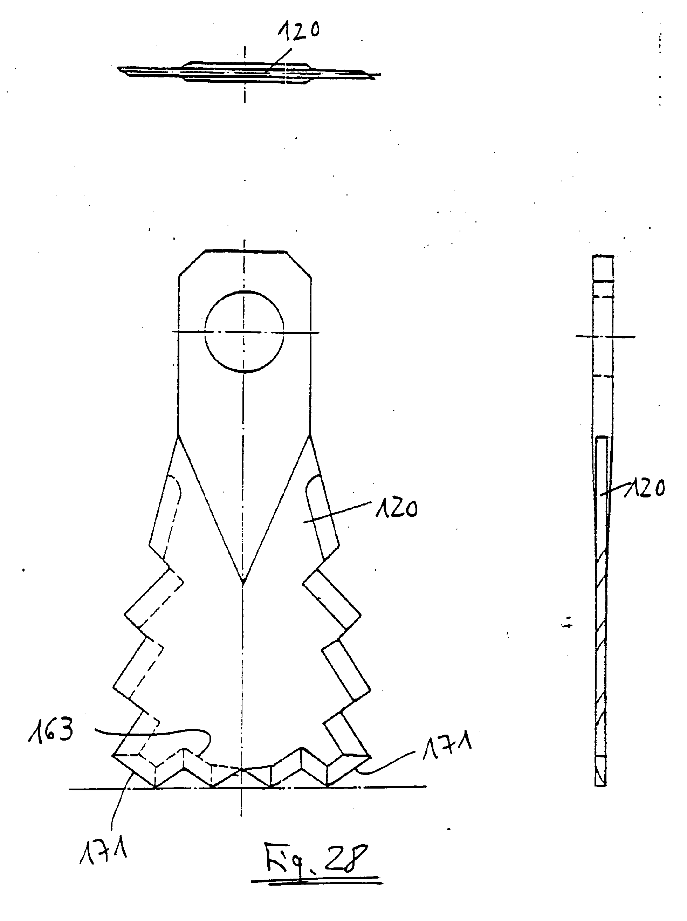

Die Fig. 24 zeigt in einer der Fig. 21 entsprechenden Darstellung ein weiteres Messer 120 in einer Ansicht von oben, bei dem die Schneide an der Stirnseite symmetrisch ist, wie aus Fig. 26 ersichtlich. Die stirnseitige symmetrische Schneide ist mit dem Bezugszeichen 161 versehen.

Die Fig. 27 zeigt ein Messer 120, bei dem die Stirnseite eine gerade Schneide aufweist, wie anhand der strichpunktierten Linie 162 ersichtlich. Das Messer ist stirnseitig gezahnt. Auch an den Längsseiten sind Zähne vorhanden, deren Anschliff um 180° gedreht ist.

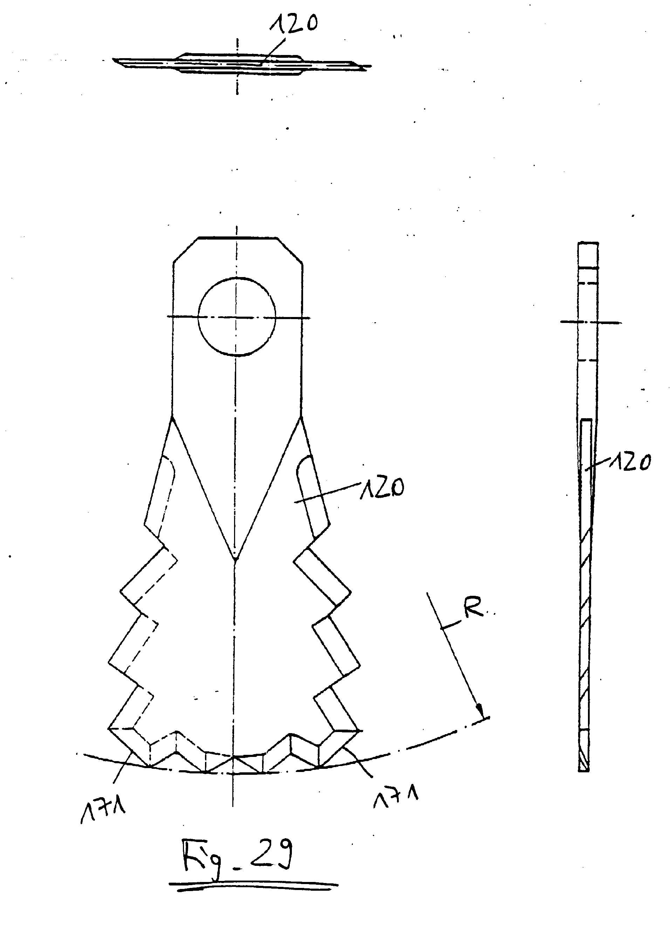

Die Fig. 28 zeigt ein Messer 120 mit einer geraden stirnseitigen Schneide 162 sowie mit stirnseitigen Zähnen. Auch hier ist der Anschliff an den Längsseiten wieder um 180° gedreht. Diese Drehung um 180° setzt sich auch an der Stirnseite fort, was durch die gestrichelte Linie 163 verdeutlicht wird. Die äußeren Ecken des Messers 120 sind abgeschrägt, also mit Abschrägungen 171 versehen, die vorzugsweise 25 - 35 mm lang sind.

Die Fig. 29 zeigt das in Fig. 28 dargestellte Messer mit dem Unterschied, daß es in der Fig. 29 eine runde Schneide aufweist, also eine Schneide mit einem Radius R.

Bei sämtlichen Messern kann auch der Anschliff an den Längsseiten symmetrisch sein.

An der Stirnseite können die äußeren Ecken der Messer abgeschrägt und mit angeschliffenen Schneiden versehen sein. Die Maisstengel werden von den abgeschrägten Ecken zusätzlich den Rückhaltern zugeführt und gleichzeitig durch die angeschliffenen Schneiden zerkleinert. Die Schneiden werden um die Messerecken herumgezogen und verlängert; dadurch wird der Kraftaufwand für das Schneiden verringert. In einer nicht dargestellten Ausführungsform können die Messerecken auch abgerundet und mit angeschliffenen Schneiden ausgerüstet werden.

Es liegt im Rahmen der Erfindung, wenn die Zähne an den Stirnseiten der Messer keinen Anschliff erhalten.

## Patentansprüche

1. Pflückvorrichtung zum Ernten von Halmfrüchten, insbesondere Mais, mit einem unterhalb eines Pflückers (12) angeordneten Stengelhäcksler (13) zum Zerkleinern und Breitstreuen der Stengel, wobei der Stengelhäcksler (13) um eine vertikale Achse rotierende Messer (20) und mindestens ein diese teilweise umgebendes Leitblech (25) aufweist, in dem Rückhaltebleche (26) oder -leisten angeordnet sind,
**dadurch gekennzeichnet,**
daß die Messer (20) an ihrer radial außen liegenden Seite keilförmig gestaltet und/oder gezahnt sind.

2. Pflückvorrichtung nach Anspruch 1, dadurch gekennzeichnet, daß die Messer (20) an ihrer radial außen liegenden Seite eine gerade Schneide aufweisen.

3. Pflückvorrichtung nach Anspruch 1, dadurch gekennzeichnet, daß die Messer (20) an ihrer radial außen liegenden Seite eine runde Schneide aufweisen.

4. Pflückvorrichtung nach Anspruch 3, dadurch gekennzeichnet, daß der Messerradius (R) gleich dem Trommel-Radius ist.

5. Pflückvorrichtung nach einem der vorhergehenden Ansprüche, dadurch gekennzeichnet, daß die Messer (20) an ihrer radial außen liegenden Seite gezahnt sind.

6. Pflückvorrichtung nach einem der vorhergehenden Ansprüche, dadurch gekennzeichnet, daß die Messer (20) an ihren Längsseiten gezahnt sind.

7. Pflückvorrichtung nach einem der vorhergehenden Ansprüche, dadurch gekennzeichnet, daß der Anschliff der Messer (20) an ihren Längsseiten um 180° gedreht ist.

8. Pflückvorrichtung nach einem der vorhergehenden Ansprüche, dadurch gekennzeichnet, daß die Schneide an der radial außen liegenden Seite symmetrisch ist.

9. Pflückvorrichtung nach einem der vorhergehenden Ansprüche, dadurch gekennzeichnet, daß die Leitbleche (25) und/oder die Rückhaltebleche (26) verstellbar angeordnet sind, wobei die Rückhaltebleche (26) vorzugsweise einzeln verstellbar sind.

10. Pflückvorrichtung nach einem der vorhergehenden Ansprüche, dadurch gekennzeichnet, daß die Rückhaltebleche (26) gezahnt sind und/oder daß die Rückhaltebleche (26) aus Vierkantleisten bestehen.

11. Pflückvorrichtung nach einem der vorhergehenden Ansprüche, dadurch gekennzeichnet, daß auf der dem Leitblech (25) gegenüberliegenden Seite der rotierenden Messer (20) ein Zuleitblech (133) angeordnet ist.

12. Pflückvorrichtung nach einem der vorhergehenden Ansprüche, dadurch gekennzeichnet, daß quer zur Mähdrescher-Fahrtrichtung mehrere Stengelhäcksler vorgesehen sind.

13. Pflückvorrichtung nach einem der vorhergehenden Ansprüche, dadurch gekennzeichnet, daß das Zuleitblech (133)schräg auf die rotierenden Messer zu verläuft.

## Claims

1. Harvesting device for cereals, especially maize, with a stalk cutter (13) arranged underneath a picker (12) for comminution and scattering of the stalks, said stalk cutter (13) featuring knives (20) rotating around a vertical axis, and at least one guide plate (25) partially surrounding said rotating knives (20), in which guide plate (25) retention plates (26) or bars are arranged,
**characterised in that**
the knives (20) are tapered and/or serrated at their outer radial edge.

2. Harvesting device according to Claim 1, characterised in that the knives (20) exhibit a straight blade at their outer radial edge.

3. Harvesting device according to Claim 1, characterised in that the knives (20) exhibit a round blade at their outer radial edge.

4. Harvesting device according to Claim 3, characterised in that the knife radius (R) is the same as the drum radius.

5. Harvesting device according to one of the preceding claims, characterised in that the knives (20) are serrated at their outer radial edge.

6. Harvesting device according to one of the preceding claims, characterised in that the knives (20) are serrated along their longitudinal edges.

7. Harvesting device according to one of the preceding claims, characterised in that the bevel of the knives (20) on their longitudinal edges is rotated 180°.

8. Harvesting device according to one of the preceding claims, characterised in that the blade at the outer radial edge is symmetrical.

9. Harvesting device according to one of the preceding claims, characterised in that the guide plates (25) and/or the retention plates (26) are of adjustable arrangement, the retention plates (26) preferably being individually adjustable.

10. Harvesting device according to one of the preceding claims, characterised in that the retention plates (26) are serrated and/or that the retention plates (26) consist of square-section bars.

11. Harvesting device according to one of the preceding claims, characterised in that a feed plate (133) is arranged on the opposite side of the rotating knives (20) to that at which the guide plate (25) is arranged.

12. Harvesting device according to one of the preceding claims, characterised in that several stalk cutters are arranged transverse to the direction of harvester travel.

13. Harvesting device according to one of the preceding claims, characterised in that the feedplate (133) is inclined and/or tapered towards the rotating knives.

## Revendications

1. Dispositif de ramassage pour la récolte de céréales, notamment de maïs, comprenant une hacheuse de tiges (13) disposée en dessous d'un dispositif de ramassage (12) pour fractionner et disperser en largeur les tiges, la hacheuse de tiges (13) présente des couteaux (20) tournant autour d'un axe vertical et au moins une tôle de guidage (25) entourant ceux-ci partiellement, dans lequel sont disposées des tôles ou des barres de retenue (26),
**caractérisé**
en ce que les couteaux (20) sont configurés en forme de coin et/ou dentés à leur côté situé radialement vers l'extérieur.

2. Dispositif de ramassage selon la revendication 1, caractérisé en ce que les couteaux (20) présentent à leur côté situé radialement vers l'extérieur un tranchant droit.

3. Dispositif de ramassage selon la revendication 1, caractérisé en ce que les couteaux (20) présentent à leur côté situé radialement vers l'extérieur un tranchant rond.

4. Dispositif de ramassage selon la revendication 3, caractérisé en ce que le rayon de couteau (R) est égal au rayon de tambour.

5. Dispositif de ramassage selon l'une des revendications précédentes, caractérisé en ce que les couteaux (20) sont dentés à leur côté situé radialement vers l'extérieur.

6. Dispositif de ramassage selon l'une des revendications précédentes, caractérisé en ce que les couteaux (20) sont dentés à leurs côtés longitudinaux.

7. Dispositif de ramassage selon l'une des revendications précédentes, caractérisé en ce que l'affûtage des couteaux (20) à leurs côtés longitudinaux est tourné de 180°.

8. Dispositif de ramassage selon l'une des revendications précédentes, caractérisé en ce que le couteau est symétrique au côté situé radialement vers l'extérieur.

9. Dispositif de ramassage selon l'une des revendications précédentes, caractérisé en ce que les tôles de guidage (25) et/ou les tôles de retenue (26) sont disposées de façon réglable, les tôles de retenue (26) étant de préférence réglables individuellement.

10. Dispositif de ramassage selon l'une des revendications précédentes, caractérisé en ce que les tôles de retenue (26) sont dentées et/ou que les tôles de retenue (26) sont constituées de barres à profil carré.

11. Dispositif de ramassage selon l'une des revendications précédentes, caractérisé en ce qu'il est disposé sur le côté opposé à la tôle de guidage (25) des couteaux tournants (20), une tôle d'amenée (133).

12. Dispositif de ramassage selon l'une des revendications précédentes, caractérisé en ce que plusieurs hacheuses de tiges sont prévues transversalement à la direction d'avance de la moissonneuse-batteuse.

13. Dispositif de ramassage selon l'une des revendications précédentes, caractérisé en ce que la tôle d'amenée (133) s'étend suivant une certaine inclinaison vers les couteaux en rotation.
